# EUROPÄISCHE PATENTSCHRIFT

(11) **EP 2 431 616 B1**
(45) Veröffentlichungstag und Bekanntmachung des Hinweises auf die Patenterteilung: **21.01.2015**
(21) Anmeldenummer: 11401588.6
(22) Anmeldetag: 07.09.2011
(51) Int. Cl.: F16B 2/24, F16B 5/12

(54) **Klemmbügel**
Clamping bracket
Etrier de serrage

(30) Priorität: 16.09.2010 DE 102010037589
(43) Veröffentlichungstag der Anmeldung: 21.03.2012
(73) Patentinhaber: GEBHARDT Transport- und Lagersysteme GmbH, 93413 Cham (DE)
(72) Erfinder: Hauser, Erwin, 93413 Cham (DE)
(74) Vertreter: Mischung, Ralf

(56) Entgegenhaltungen:
- DE-A1-102007 005 964
- US-A- 2 332 855
- US-A- 4 175 303
- US-B1- 6 216 987

## Beschreibung

Die vorliegende Erfindung betrifft einen Klemmbügel, insbesondere zur Fixierung von Wandelementen auf Rollplatten, nach dem Oberbegriff des Anspruchs 1.

Unter anderem aus der Lebensmittellogistik ist es bekannt, Güter auf Rollplatten zu lagern, um sie so auf einfache Weise bewegen zu können. Derartige Rollplatten lassen sich beispielsweise leicht von einem LKW in die Verkaufsräume eines Lebensmittelgeschäftes bewegen, um dort von der Rollplatte herunter die Regale zu bestücken. Um die Waren gegen seitliches Herabfallen zu sichern, sind einige Rollplatten zur Aufnahme von Wandelementen ausgebildet, die mit nach unten ragenden Rohrabschnitten in dafür vorgesehene Ausnehmungen der Rollplatte eingesteckt werden können. Um die Rollplatten flexibel einsetzen zu können, ist es von Vorteil, die Wandelemente bei Bedarf von der Rollplatte wieder lösen zu können. Andererseits soll das aufgesteckte Wandelement sicher und stabil mit der Rollplatte verbindbar sein.

Aus dem Stand der Technik ist daher ein Klemmbügel bekannt, der an einem waagerechten Rohrabschnitt des Wandelements angreift und um diesen Rohrabschnitt frei schwenkbar ist. An seinem anderen Ende besitzt der bekannte Klemmbügel einen hakenartigen Vorsprung, um mit diesem die Unterseite der Rollplatte hintergreifen zu können. Dazu wird das Wandelement mit seitlich ausgelenktem Klemmbügel auf die Rollplatte aufgesteckt, um anschließend den Klemmbügel nach unten um eine Außenkante der Rollplatte herum zu schwenken, so dass der hakenartige Vorsprung die Rollplatte von unten hintergreift und das unerwünschte Herauslösen des Wandelements nach oben aus der Rollplatte verhindert.

Die Bedienung des bekannten Klemmbügels ist schwierig. Das Lösen des Wandelements von der Rollplatte erfolgt meist, in dem der Bediener vorzugsweise mit dem Fuß gegen den vertikal über die Querstrebe der Aufsteckwand nach oben hinausstehenden Hebelabschnitt des Klemmbügel tritt oder mit einem Hammer dagegen schlägt, um den auf der Unterseite der Rollplatte angreifenden hakenartigen Vorsprung herauszuschwenken und so die Verklemmung des Wandelements gegenüber der Rollplatte zu lösen. Dabei bleibt der Klemmbügel häufig mit seinem hakenartigen Vorsprung an der Rollplattenunterseite hängen, was das Abnehmen der Aufsteckwand erschwert. Auch das Aufsetzen des Wandelements ist umständlich, da sich der Klemmbügel aufgrund der Schwerkraft selbsttätig nach unten verschwenkt noch bevor das Wandelement in die Rollplatte eingesteckt werden kann. In dieser Lage blockiert es jedoch die geplante Einsteckbewegung, da der hakenartige Vorsprung bei der vertikalen Abwärtsbewegung des Wandelements auf der Oberseite der Rollplatte aufliegt. Entsprechend muss der Klemmbügel in einer ausgelenkten Position gehalten werden, während gleichzeitig das Wandelement in die Rollplatte abgesenkt wird. Dies ist oft nur mit besonderem Geschick und unter Zuhilfenahme von Händen und Füßen möglich.

Aus der US 2,332,855 ist ein Klemmelement zum Fixieren von Leitungen bekannt, bei dem ein Abschnitt des ansonsten ortsfesten Klemmelements temporär aufgebogen werden kann, um einzelne Leitungsstränge aus einem Klemmbereich zu entnehmen bzw. darin einzusetzen. Zur Fixierung von Wandelementen ist das Klemmelement jedoch nicht geeignet.

Aufgabe der Erfindung ist es daher, einen verbesserten Klemmbügel anzubieten, der die Montage und Demontage von Wandelementen auf Rollplatten erleichtert bzw. vereinfacht.

Die Aufgabe wird gelöst durch einen Klemmbügel nach Anspruch 1.

Der erfindungsgemäße Klemmbügel beruht auf der Überlegung, diesen nach Art eines zweiarmigen Hebels auszuführen und am Klemmbügel ein Federelement vorzusehen, welches den in den Montageabschnitt eingeschobenen, vorzugsweise rohrförmigen Abschnitt des Wandelements radial mit einer Federkraft beaufschlagt, um das Klemmelement in einer beliebig um die Schwenkachse positionierten Schwenklage zu halten. In Verbindung mit der besonders leichten Betätigung des Klemmbügels durch den Betätigungsabschnitt (s.u.) erlaubt das Federelement die Ausrichtung des Klemmbügels in eine im Wesentlichen horizontale (im Grunde jedoch beliebige) Drehlage. So kann insbesondere der hakenartige Vorsprung während des Einsetzens oder der Entnahme des Wandelements in eine nicht behindernde ausgeschwenkte Lage bewegt werden.

Aufgrund der Federkraft wird sich der Klemmbügel zum Bespiel beim Einsetzen des Wandelements nicht selbsttätig in eine vertikale Lage ausrichten (etwa aufgrund der Schwerkraft), so dass der hakenartige Vorsprung (Klemmabschnitt) am unteren Ende des Klemmbügels nicht mit der Oberseite der Rollplatte kollidiert, während das Wandelement in die Rollplatte eingesteckt werden soll. Dadurch ergibt sich der besondere Vorteil, dass der Bediener das Wandelement in die Bodenplatte einstecken kann, ohne mit dem Fuß gleichzeitig den Klemmbügel in die horizontale Lage zu drehen, um den Klemmabschnitt seitlich nach außen zu schwenken. Aufgrund der Federwirkung behält der Klemmbügel die zuvor gewählte Schwenklage bei, bis der Bediener (nach erfolgreichem Aufsetzen des Wandelements) den Klemmbügel aus der waagerechten in die senkrechte Klemmlage herunterdrückt, wobei der Klemmabschnitt unter die Bodenplatte gelangt und diese hintergreift.

Auch bei der Entnahme kann der Klemmabschnitt am unteren Ende des Klemmbügels zunächst unter der Bodenplatte herausgeschwenkt werden, wobei der Klemmbügel durch das erfindungsgemäße Federelement diese Schwenklage beibehält, bis das Wandelement vollständig entfernt ist. Beim Stand der Technik dagegen dreht sich der Klemmbügel nach dem aktiven Herausschwenken durch den Bediener jedoch schwerkraftbedingt meist von alleine wieder in eine weitgehend vertikale Lage, bei der der Klemmabschnitt die Bodenplatte zumindest teilweise wieder untergreift und die Entnahme des Wandelements behindert. Dagegen gestattet der erfindungsgemäße Klemmbügel die Beibehaltung einer gewählten Schwenklage ohne Behinderung der Bewegung des mit dem Klemmbügel gekoppelten Wandelements.

Zugleich behindert die erfindungsgemäße Feder auch eine Längsverschiebung des Klemmbügels entlang des rohrförmigen Abschnitts am Wandelement. Sofern die Bodenplatte entlang ihrer Längskante spezielle Bereiche für den Eingriff des Klemmabschnitts vorsieht, lässt sich der Klemmbügel in der entsprechenden Längsposition entlang des Rohrabschnittes am Wandelement vorpositionieren und wird auch während der Aufsteckbewegung nicht seitlich verrutschen.

Zweckmäßigerweise kann auch dieses Federelement einstückig mit dem Klemmbügel verbunden sein und durch Verformung eines geeigneten Segments aus einem flachen Blechstreifen heraus gebildet werden.

Der obere Hebelarm lässt sich insbesondere auch mit dem Fuß betätigen. Durch eine in Richtung auf die Aufsteckwand gerichtete Druck- oder Stoßbeaufschlagung des oberen Hebelabschnitts (bspw. mit dem Fuß) wird der erfindungsgemäße Klemmbügel zum Verschwenken aus der Klemmposition heraus veranlasst, so dass der untere hakenartige Vorsprung von der Unterseite der Bodenplatte weg nach außen geschwenkt wird und dadurch die Verklemmung des Wandelements mit der Bodenplatte aufhebt. Zugleich gestattet der obere Hebelarm auch die Ausrichtung des Klemmbügels in eine beispielsweise im Wesentlichen waagerechte Position, um in dieser Lage das Wandelement ungehindert in die Bodenplatte einstecken zu können, wobei der Klemmbügel auf Grund der Feder diese Schwenklage anschließend beibehält. Nach dem Einstecken des Wandelements in die Bodenplatte kann der Klemmbügel entweder schwerkraftbedingt durch einfaches Loslassen oder durch aktive Betätigung mit dem Fuß herabgeschwenkt werden.

Um den Klemmbügel vollständig in seine Klemmposition zu bewegen, bei der der hakenartige Vorsprung die Bodenplatte von unten hintergreift, kann dann eine kurze Stoß- oder Druckbeaufschlagung des unteren Hebelabschnitts in Richtung auf bzw. in der Ebene der Bodenplatte genügen, so dass sich der Klemmbügel im Wesentlichen vertikal bzw. parallel zum Wandelement enganliegend an der Seitenkante der Bodenplatte erstreckt und mit dem unteren, rechtwinklig nach innen vorstehenden hakenartigen Vorsprung die Bodenplatte sicher hintergreift. Zweckmäßigerweise ist der erfindungsgemäße Klemmbügel mit seinen Abmessungen so an die Dicke der Bodenplatte angepasst, dass der untere hakenartige Vorsprung in dieser Klemmposition mit einer gewissen Klemmkraft von unten gegen die Bodenplatte drückt, um das Wandelement unter Zugbeanspruchung in der Bodenplatte zu halten.

Aufgrund des oberen bzw. zweiten Hebelabschnittes in Verbindung mit der Feder lässt sich der Klemmbügel vorteilhaft ausschließlich mit dem Fuß bedienen, so dass der Bediener beide Hände zur sicheren Führung und Positionierung des Wandelements einsetzen kann, statt mit einer Hand den Klemmbügel lösen oder in eine temporär herausgeschwenkte Lage bewegen zu müssen.

Der erfindungsgemäße Klemmbügel umfasst somit einen ersten Hebelabschnitt auf einer ersten Seite einer gedachten Ebene, wobei zu diesem ersten Hebelabschnitt ein im Wesentlichen gerade geformter, sich in einer ersten Richtung X₁ von der Ebene fort erstreckender Anschlagabschnitt gehört. An das untere Ende des Anschlagabschnitts schließt ein als hakenartiger Vorsprung ausgebildeter Klemmabschnitt an, der sich unter einem vorzugsweise rechten Winkel in eine zweite Richtung Y erstreckt. Der Anschlagabschnitt grenzt im Bereich der gedachten Ebene an einen Montageabschnitt, der um eine Hebelschwenkachse ausgebildet ist und zur Aufnahme eines Rohrabschnitts des auf einer Rollplatte zu befestigenden Wandelements dient. Die Hebelschwenkachse verläuft in einer zur ersten und zweiten Richtung X₁, Y senkrecht gerichteten dritten Richtung Z in der gedachten Ebene.

Ein Federmechanismus richtet dabei eine Federkraft in den Bereich des Montageabschnitts derart, dass die Federkraft auf einen durch den Montageabschnitt hindurchgeführten Abschnitt des Wandelements einwirkt. Dadurch wird eine Reibkraft zwischen Feder und Wandelementabschnitt erzeugt, die ein ungewolltes Verschwenken des Klemmbügels relativ zum Wandelement verhindert. Die Federkraft sollte dabei so gewählt werden, dass einerseits eine gewählte Schwenklage sicher beibehalten wird, andererseits das Verschwenken aber ohne besonderen Kraftaufwand durch den Bediener möglich ist.

Ferner ist zum Verschwenken des Klemmbügels auf der zweiten Seite der gedachten Ebene ein zweiter Hebelabschnitt vorgesehen. Dieser umfasst einen mit dem Anschlagabschnitt oder dem Montageabschnitt verbundenen Betätigungsabschnitt, der sich in der zur Richtung X₁ entgegengesetzten Richtung X₂ von der Ebene fort erstreckt.

Eine vorteilhafte Ausführungsform des Klemmbügels sieht vor, dass der Anschlagabschnitt und der Betätigungsabschnitt einstückig ausgebildet sind, also aus einem einzigen Teil gefertigt sind. Dies erhöht die Stabilität des Bügels und reduziert zugleich die Herstellungskosten.

Eine besonders zu bevorzugende Ausführungsform des erfindungsgemäßen Klemmbügels sieht weiterhin vor, dass der Anschlagabschnitt und der Betätigungsabschnitt sich längs einer Geraden erstrecken, insgesamt also einen geraden zweiarmigen Hebel bilden. Zweckmäßigerweise führt der Hebel tangential an dem Montageabschnitt vorbei, so dass die durch den Montageabschnitt führende Schwenkachse einen seitlichen Abstand zum geraden Hebel hat. Einerseits gestattet dies die besonders einfache Herstellung des Hebels, wie noch beschrieben wird. Andererseits wird durch diese Form dem Umstand Rechnung getragen, dass sich der Abschnitt des Wandelements, an dem der Klemmbügel angreift und um den er sich schwenken soll, im aufgesteckten Zustand des Wandelements üblicherweise nicht seitlich über den Rand der Bodenplatte hinausragt. Die Schwenkachse liegt in diesem Fall also etwas innerhalb der Außenkante der Bodenplatte. Da zumindest der Anschlagabschnitt aber seitlich an der Außenkante der Bodenplatte vorbei nach unten ragen können soll, wird die vorgenannte Form des Klemmbügels dieser Anforderung besonders gut gerecht.

Grundsätzlich ist allerdings auch denkbar, die Schwenkachse unmittelbar durch den vom Anschlagabschnitt und Betätigungsabschnitt gebildeten geraden zweiarmigen Hebel zu führen, wobei der Montageabschnitt dann etwa symmetrisch zu der vom Hebel gebildeten Geraden geformt wäre. In diesem Fall wäre durch eine geeignete Ausnehmung in der Bodenplatte oder durch seitlichen Versatz des den Klemmbügel tragenden Abschnitts des Wandelements wieder sicherzustellen, dass sich der Klemmbügel zur Einnahme der Klemmposition wieder vorzugsweise senkrecht bzw. parallel zur Außenkante der Bodenplatte stellen kann. Dies erscheint zweckmäßig, um bei aufgestecktem und festgeklemmtem Wandelement im Bereich der Bodenplatte durch den Klemmbügel keine nach außen abstehenden und möglicherweise gefährdenden Vorsprünge zu bilden.

Vorteilhafterweise kann der erfindungsgemäße Klemmbügel komplett einstückig gefertigt sein, beispielsweise ausgehend von einem flachen Blechstreifen. Durch Umformung definierter Segmente des Blechstreifens lässt sich insbesondere der Montageabschnitt und der Klemmabschnitt ausbilden.

So lässt sich zum Beispiel der Montageabschnitt, ausgehend von einer im Wesentlichen flachen Ausgangsstruktur (Blechstreifen) durch Umbiegen eines oder mehrerer Segmente aus der Ausgangsstruktur heraus zu jeweils einem umgebogenen Streifen ausbilden, während die verbleibenden, nicht umgebogenen Segmente den Betätigungsabschnitt bilden. Während ein erstes Ende eines zur Herstellung des Montageabschnitts umzubiegenden Streifens dann etwa am oberen Ende des Anschlagabschnitts mit diesem verbunden bleibt bzw. tangential daran anschließt, wird der restliche Teil des Streifens aus der Blechebene herausgebogen und zu einer vorzugsweise kreisförmigen Öse um die geplante Schwenkachse des Klemmbügels herumgebogen. Sofern der Streifen zu einem nahezu vollständigen Kreisbogen geformt wird, liegt sein freies Ende im Bereich des oberen Endes des Anschlagabschnitts an.

Zur besonders genauen und stabilen Führung des Klemmbügels um die Schwenkachse herum können - ausgehend von einem ersten Ende des flachen Blechstreifens - auch mehrere zueinander beabstandete parallele Streifen in die vorgenannte Ösenform umgebogen werden, so dass über die Breite des Blechstreifens mehrere gleichartige Ösen entstehen, deren Mittelpunkt jeweils auf der Schwenkachse liegt und die gemeinsam den Montageabschnitt ausbilden. Die an die umzubiegenden Streifen angrenzenden Segmente des Blechstreifens verbleiben in dessen ursprünglicher Ebene und bilden den Betätigungsabschnitt, der ebenfalls aus mehreren, parallelen Streifenabschnitten bestehen könnte. Denkbar ist es auch, nach einer vorteilhaften Ausführungsform die zu mehreren Ösen jeweils umgebogenen Streifen an ihren freien Enden einstückig miteinander verbunden zu lassen, um den Montageabschnitt noch stabiler zu gestalten. Der nicht umgebogene, als Betätigungsabschnitt in der Blechebene verbleibende Teil reicht dann (vor der Umformung) mit seinem freien äußeren Ende nicht bis an den Rand des Blechstreifens heran, da der fehlende Abstand als einstückige Querverbindung zwischen den freien Enden der jeweils zu den Ösen umzubiegenden Streifen dient.

Da bei der zu bevorzugenden geradlinigen Ausbildung des zweiseitigen Hebels neben dem Betätigungsabschnitt auch der Anschlagabschnitt unverändert in der Ebene des Ursprünglichen Blechstreifens verbleiben kann, muss lediglich der Klemmabschnitt am unteren zweiten Ende des Blechstreifens bzw. am Ende des Anschlagabschnitts, in geeigneter Weise (vorzugsweise rechtwinklig) umgebogen werden, um die Bodenplatte hintergreifen zu können. So lässt sich durch einfache Maßnahmen der erfindungsgemäße Klemmbügel ausbilden.

Hinweis: Da der Anschlagabschnitt bzw. die Ösen den vorzugsweise rohrförmigen horizontalen Teil des Wandelements umgreifen müssen, erfolgt die Verformung bzw. Herstellung des gebogenen Montageabschnitts um diesen dann am Blechstreifen anliegenden Rohrabschnitt herum, wodurch der Klemmbügel zwar grundsätzlich unlösbar, jedoch verschieblich und frei verschwenkbar gegenüber dem Rohrabschnitt mit dem Wandelement verbunden ist.

Eine Weiterführung der Erfindung sieht vor, einzelne Zonen des Klemmbügels durch Prägungen bzw. Verformungen, insbesondere Sicken, zu verstärken. Dadurch erfährt der Bügel eine Steigerung der Steifigkeit, insbesondere entlang seiner Erstreckungsrichtung X bzw. gegen Belastungen quer dazu. Die Sicken können durch Prägevorgänge eingebracht werden, vorzugsweise bevor einzelne Zonen des aus einem ursprünglich geraden Werkstück gebildeten Klemmbügels umgebogen werden. Besonders vorteilhaft wirken dabei die Sicken, welche in den Montageabschnitt eingebracht wurde und sich im wesentlichen entlang der Streifen erstrecken, die zu kreisförmigen Ösen um die Schwenkachse herum gebogen sind. Diese Sicken stabilisieren die Bogenform der Segmente zusätzlich und verhindern besonders wirksam deren ungewolltes Wiederaufbiegen ("Aufrollen").

Nachfolgend soll eine besondere Ausführungsform des erfindungsgemäßen Klemmbügels anhand von Figuren näher erläutert werden. Dabei zeigt
- Fig. 1: eine perspektivische und schematische Ansicht des Klemmbügels,
- Fig. 2: den Klemmbügel gemäß Fig. 1 an einem Wandelement, und
- Fig. 3: eine Rollplatte mit aufgestecktem Wandelement, welches mithilfe des Klemmbügels gegen die Rollplatte verspannt ist.

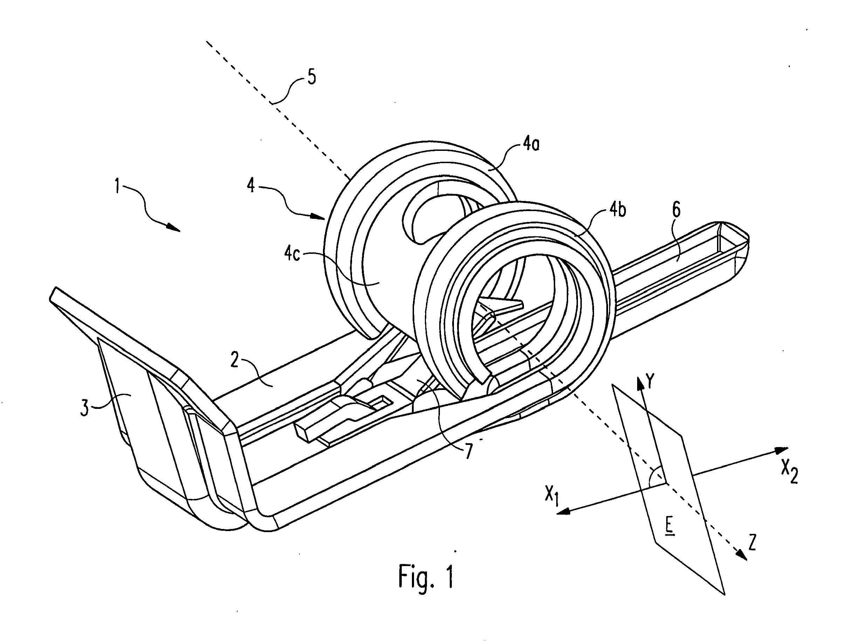

Fig. 1 zeigt den aus einem flachen Blechstreifen geformten Klemmbügel 1. Der Klemmbügel 1 umfasst einen flachen, gesickten Anschlagabschnitt 2, der im späteren Betrieb seitlich an der Außenkante der Rollplatte anliegt bzw. anschlägt. Der Anschlagabschnitt 2 erstreckt sich längs einer ersten Richtung X₁ in einer Breite, die sich in einer zur ersten Richtung X₁ senkrechten dritten Richtung Z erstreckt. In Richtung X₁ schließt sich an das Ende des Anschlagabschnitts 2 unter einem Winkel von etwa 90° ein gesickter Klemmabschnitt 3 an. Der Klemmabschnitt 3 erstreckt sich dabei in einer zur ersten Richtung X₁ und zur dritten Richtung Z senkrecht verlaufenden zweiten Richtung Y. An seinem freien Ende ist der Klemmabschnitt 3 leicht abgeschrägt, um das Verschwenken an der Unterkante der Bodenplatte vorbei zu erleichtern.

An seinem dem Klemmabschnitt 3 in X-Richtung gegenüberliegenden Ende grenzt der Anschlagabschnitt 2 an eine gedachte Ebene E, die sich entlang der Richtungen Y und Z erstreckt. An den Anschlagabschnitt 2 schließen sich im Bereich dieser Ebene zwei jeweils zu einer Öse geformte, gesickte Streifenabschnitte 4a und 4b an, die gemeinsam einen Montageabschnitt 4 ausbilden. Die Ösen 4a, 4b umlaufen eine zentrisch dazu angeordnete Schwenkachse 5 und dienen zur Aufnahme eines in Fig. 1 nicht dargestellten Rohrelements. Die beiden die Ösen 4a und 4b ausbildenden Streifen sind an ihren freien äußeren Enden einstückig verbunden durch eine Materialzone 4c.

Auf der dem Anschlagabschnitt 2 abgewandten zweiten Seite der Ebene E erstreckt sich in einer zur ersten Richtung X₁ entgegengesetzt verlaufenden Richtung X₂ ein gesickter Betätigungsabschnitt 6, der nach erfolgter Ausformung der Ösen 4a und 4b in der Ebene des ursprünglichen Blechstreifens verblieben ist. Der Betätigungsabschnitt 6 und der Anschlagabschnitt 2 bilden einen einstückigen, zweiarmigen Hebel, wobei die Schwenkachse 5 des Hebels um den Radius der Ösen 4a und 4b vom Hebel beabstandet angeordnet ist. Der gesamte Klemmbügel ist einstückig aus einem ehemals flachen Blechstreifen gefertigt, wobei einzelne Zonen zusätzlich durch Sicken verstärkt wurden.

Weiterhin umfasst der Klemmbügel 1 das erfindungsgemäße Federelement 7 in Form einer Blattfeder, die zur radialen Beaufschlagung eines durch die Ösen 4a, 4b durchgesteckten Rohrelements dient, um unbeabsichtigtes Verdrehen des Klemmbügels 1 relativ zu diesem Rohrabschnitt unterbinden zu können.

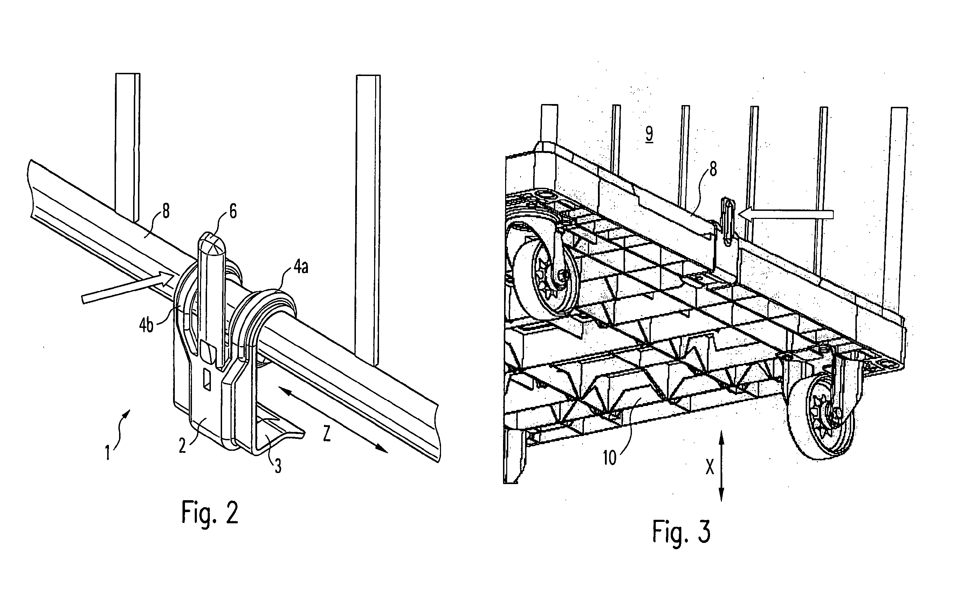

Fig. 2 zeigt den erfindungsgemäßen Klemmbügel 1, nach dem die Ösen 4a und 4b um ein Rohrelement 8 herum verformt wurden. Das Rohrelement 8 stellt eine untere horizontale Querstrebe eines in Fig. 3 angedeuteten Wandelements 9 dar. Zwischen den Ösen 4a und 4b bzw. dem darin verlaufenden Rohrelement 8 ist ausreichend Spiel vorgesehen, so dass der Klemmbügel 1 relativ zum Rohrelement 8 verschwenkbar und in Z-Richtung verschiebbar ist. Zugleich erzeugt die Feder 7 eine Beaufschlagungskraft auf das Rohrelement 8, um den Klemmbügel 1 in jede beliebige Schwenklage stabil ausrichten zu können.

In Fig. 3 ist zu sehen, wie das Wandelement 9 von oben auf eine Rollplatte 10 aufgesteckt ist. An dem unteren waagerecht verlaufenden Rohrelement 8 des Wandelements 9 ist der erfindungsgemäße Klemmbügel 1 in Klemmposition angeordnet. In dieser Lage liegt der Anschlagabschnitt 2 seitlich an der Außenkante der Rollplatte 10 an und erstreckt sich in X-Richtung, ebenso wie der daran angrenzende, nach oben frei herausragende Betätigungsabschnitt 6. Der unten an den Anschlagabschnitt 2 angrenzende Klemmabschnitt 3 untergreift die Rollplatte 10 von unten und verspannt damit das Wandelement 9 gegen die Rollplatte 10, um ein unbeabsichtigtes Lösen von Wandelement 9 und Rollplatte 10 in X-Richtung zu verhindern. Um das Wandelement 9 von der Rollplatte 10 zu entnehmen, genügt eine kurze Beaufschlagung des Betätigungsabschnitts 6 in Richtung des in Fig. 2 und Fig. 3 dargestellten Teiles, um den Klemmbügel 1 um seine Schwenkachse 5 (die in Fig. 2 und Fig. 3 mit der Längsachse des Rohrelements 8 zusammenfällt) in eine ausgeschwenkte Lage zu verdrehen, so dass sich der Klemmabschnitt 3 aus seiner Position unterhalb der Rollplatte 10 seitlich herausbewegt. Dank der Feder wird diese Schwenklage beibehalten, so dass das Wandelement 9 anschließend nach oben abgehoben werden kann.

## Patentansprüche

1. Klemmbügel (1), insbesondere zur Fixierung von Wandelementen (9) auf Rollplatten (10),
a) mit einem ersten Hebelabschnitt auf einer ersten Seite einer gedachten Ebene (E), umfassend einen im Wesentlichen gerade geformten, sich in einer ersten Richtung (X₁) von der Ebene fort erstreckenden Anschlagabschnitt (2) und einen sich an das untere Ende des Anschlagabschnitts (2) anschließenden Klemmabschnitt (3), der sich unter einem vorzugsweise rechten Winkel in eine zweite Richtung (Y) erstreckt,
b) wobei der Anschlagabschnitt (2) im Bereich der Ebene an einen um eine Hebelschwenkachse (5) ausgebildeten Montageabschnitt (4) angrenzt, wobei die Hebelschwenkachse (5) in einer zur ersten und zweiten Richtung (X₁ Y) senkrecht gerichteten dritten Richtung (Z) in der Ebene verläuft, und
c) wobei zum Verschwenken des Klemmbügels (1) um die Schwenkachse ein zweiter Hebelabschnitt vorgesehen ist, der einen mit dem Anschlagabschnitt (2) oder dem Montageabschnitt (4) verbundenen Betätigungsabschnitt (6) umfasst und sich von der zweiten Seite der Ebene in zur ersten Richtung (X₁) entgegengesetzter Richtung (X₂) fort erstreckt,
**dadurch gekennzeichnet,**
d) **dass** der Klemmbügel (1) ein Federelement (7) aufweist, welches ein in den Montageabschnitt (4) einzuschiebendes Rohrelement (8) radial mit einer Federkraft beaufschlagt, um den Klemmbügel (1) in einer beliebig um die Schwenkachse positionierten Schwenklage zu halten.

2. Klemmbügel (1) nach Anspruch 1, **dadurch gekennzeichnet, dass** der Klemmbügel bereichsweise, insbesondere am Betätigungsabschnitt (6), am Anschlagabschnitt (2), am Klemmabschnitt (3) oder am Montageabschnitt (4) gesickt ist.

3. Klemmbügel (1) nach einem der vorigen Ansprüche, **dadurch gekennzeichnet, dass** der Anschlagabschnitt (2) und der Betätigungsabschnitt (6) einstückig ausgebildet sind.

4. Klemmbügel (1) nach einem der vorigen Ansprüche, **dadurch gekennzeichnet, dass** der Anschlagabschnitt (2) und der Betätigungsabschnitt (6) sich längs einer Geraden erstrecken, die tangential an dem Montageabschnitt (4) vorbeiläuft.

5. Klemmbügel (1) nach einem der vorigen Ansprüche, **dadurch gekennzeichnet, dass** der Klemmbügel einstückig, vorzugsweise aus einem flachen Blechstreifen, gefertigt ist.

6. Klemmbügel (1) nach einem der vorigen Ansprüche, **dadurch gekennzeichnet, dass** der Montageabschnitt (4), ausgehend von einer im Wesentlichen flachen Ausgangsstruktur, durch Umbiegen eines oder mehrerer Segmente (4ₐ, 4_{b}) aus der Ausgangsstruktur heraus zu jeweils einem umgebogenen Streifen gebildet wird.

7. Klemmbügel (1) nach dem vorhergehenden Anspruch, **dadurch gekennzeichnet, dass** die Segmente (4ₐ, 4_{b}) an ihren aus der Ausgangsstruktur herausgebogenen Enden miteinander verbunden sind.

8. Klemmbügel (1) nach einem der beiden vorhergehenden Ansprüche, **dadurch gekennzeichnet, dass** der Betätigungsabschnitt (6) oder der Anschlagabschnitt (2) durch wenigstens ein nicht umgebogenes Segment der Ausgangsstruktur gebildet wird.

9. Klemmbügel (1) nach einem der vorigen Ansprüche, **dadurch gekennzeichnet, dass** das Federelement (7) einstückig mit dem Klemmbügel ausgebildet ist.

## Claims

1. A clamping bracket (1), in particular for fixing wall elements (9) on wheeled plates (10),
a) having a first lever section on a first side of an imaginary plane (E), comprising a stop section (2) that is formed so as to be substantially straight and extends in a first direction (X₁) away from the plane and a clamping section (3) that follows on from the lower end of the stop section (2) and extends at a preferably right angle in a second direction (Y),
b) wherein the stop section (2) in the region of the plane adjoins a mounting section (4) formed about a lever pivot axis (5), wherein the lever pivot axis (5) runs in a third direction (Z) in the plane perpendicularly to the first and second direction (X₁, Y), and
c) wherein in order to swivel the clamping bracket (1) about the pivot axis there is provided a second lever section which comprises an actuating section (6) that is connected to the stop section (2) or the mounting section (4) and extends away from the second side of the plane in a direction (X₂) in opposition to the first direction (X₁),
**characterised in that**
d) the clamping bracket (1) has a spring element (7) which acts radially with a spring force upon a tubular element (8) that is to be pushed into the mounting section (4) in order to hold the clamping bracket (1) in any pivoted position about the pivot axis.

2. A clamping bracket (1) according to claim 1, **characterised in that** the clamping bracket is crimped in regions, in particular at the actuating section (6), at the stop section (2), at the clamping section (3) or at the mounting section (4).

3. A clamping bracket (1) according to one of the previous claims, **characterised in that** the stop section (2) and the actuating section (6) are formed in one piece.

4. A clamping bracket (1) according to one of the previous claims, **characterised in that** the stop section (2) and the actuating section (6) extend along a straight line that runs past the mounting section (4) tangentially.

5. A clamping bracket (1) according to one of the previous claims, **characterised in that** the clamping bracket is produced in one piece, preferably from a flat strip of sheet metal.

6. A clamping bracket (1) according to one of the previous claims, **characterised in that** the mounting section (4), starting from a substantially flat starting structure, is formed by bending round one or more segments (4ₐ, 4_{b}) out of the starting structure to give in each case a strip that has been bent round.

7. A clamping bracket (1) according to the preceding claim, **characterised in that** the segments (4ₐ, 4_{b}) are connected together at their ends that have been bent out of the starting structure.

8. A clamping bracket (1) according to one of the two preceding claims, **characterised in that** the actuating section (6) or the stop section (2) is formed by at least one segment of the starting structure that has not been bent round.

9. A clamping bracket (1) according to one of the previous claims, **characterised in that** the spring element (7) is formed in one piece with the clamping bracket.

## Revendications

1. Etrier de serrage (1), en particulier pour la fixation d'éléments muraux (9) sur des plateaux à rouleaux (10),
a) comportant un premier segment formant levier sur un premier côté d'un plan imaginaire (E), comprenant un segment de butée (2), de forme sensiblement rectiligne, s'étendant dans une première direction (X₁) à partir du plan, et un segment de serrage (3), qui prolonge l'extrémité inférieure du segment de butée (2), et qui s'étend dans une deuxième direction (Y) en faisant un angle de préférence droit,
b) dans lequel le segment de butée (2) est, dans la zone du plan, adjacent à un segment de montage (4) configuré autour d'un axe de pivotement de levier (5), l'axe de pivotement de levier (5) courant dans le plan, dans une troisième direction (Z), dirigée perpendiculairement à la première et à la deuxième directions (X₁, Y)) et
c) dans lequel, pour le pivotement de l'étrier de serrage (1) autour de l'axe de pivotement, il est prévu un deuxième segment formant levier, qui comprend un segment de manoeuvre (6), relié au segment de butée (2) ou au segment de montage (4), et qui s'étend, à partir du deuxième côté du plan, dans une direction (X₂) opposée à la première direction (X₁),
**caractérisé en ce que**
d) l'étrier de serrage (1) comprend un élément formant ressort (7), qui agit radialement avec une force de ressort sur un élément tubulaire (8) destiné à être inséré dans le segment de montage (4), pour maintenir l'étrier de serrage (1) dans une position de pivotement positionnée à volonté autour de l'axe de pivotement.

2. Etrier de serrage (1) selon la revendication (1), **caractérisé en ce que** l'étrier de serrage est nervuré par zones, en particulier contre le segment de manoeuvre (6), contre le segment de butée (2), contre le segment de serrage (3) ou contre le segment de montage (4).

3. Etrier de serrage (1) selon l'une des revendications précédentes, **caractérisé en ce que** le segment de butée (2) et le segment de manoeuvre (6) sont réalisés d'une seule pièce.

4. Etrier de serrage (1) selon l'une des revendications précédentes, **caractérisé en ce que** le segment de butée (2) et le segment de manoeuvre (6) s'étendent le long d'une droite qui court tangentiellement au segment de montage (4).

5. Etrier de serrage (1) selon l'une des revendications précédentes, **caractérisé en ce que** l'étrier de serrage est fabriqué en une seule pièce, de préférence à partir d'une bande de tôle plane.

6. Etrier de serrage (1) selon l'une des revendications précédentes, **caractérisé en ce que** le segment de montage (4) est formé, à partir d'une structure de départ sensiblement plane, par pliage d'un ou de plusieurs segments (4ₐ, 4_{b}) à partir de la structure de départ, pour former dans chaque cas une bande recourbée.

7. Etrier de serrage (1) selon la revendication précédente, **caractérisé en ce que** les segments (4ₐ, 4_{b}) sont reliés l'un à l'autre au niveau de leurs extrémités dégagées de la structure de départ par pliage.

8. Etrier de serrage (1) selon l'une des deux revendications précédentes, **caractérisé en ce que** le segment de manoeuvre (6) ou le segment de butée (2) est formé d'au moins un segment non plié de la structure de départ.

9. Etrier de serrage (1) selon l'une des revendications précédentes, **caractérisé en ce que** l'élément de ressort (7) est réalisé d'une seule pièce avec l'étrier de serrage.
